Europäisches Patentamt

**European Patent Office** (11) Publication number: **0 100 186**

Office européen des brevets A2

(12) **EUROPEAN PATENT APPLICATION**

(21) Application number: **83304124.7** (51) Int. Cl.³: **A 01 B 13/08**

(22) Date of filing: **15.07.83**

(30) Priority: **27.07.82 GB 8221707**

(71) Applicant: **BOMFORD AND EVERSHED LIMITED, Salford Priors, Evesham, Worcs. WR11 5SW (GB)**

(43) Date of publication of application: **08.02.84 Bulletin 84/6**

(72) Inventor: **Fox, John Vaudrey, Herons Reach Teddington, Stratford-upon-Avon Warwickshire (GB)**

(74) Representative: **Mayes, Stuart David et al, BOULT, WADE & TENNANT 27 Furnival Street, London, EC4A 1PQ (GB)**

(84) Designated Contracting States: **AT BE CH DE FR IT LI LU NL SE**

(54) **Subsoil cultivating tool.**

(57) A subsoil cultivating tool for attachment to the rear of a tractor comprises a frame (2) on which are mounted tines (8, 8'). Each tine comprises a laterally narrow and flexible leg (25, 25') in a backwardly-swept configuration, extending generally downwardly and rearwardly from the frame. The leg carries at its lower end a cultivator foot (11, 11') to which is attached a wing member (19, 19'). The flexibility of the leg allows lateral deflection of the foot when it encounters an obstacle in the ground.

ACTORUM AG

1.

SUBSOIL CULTIVATING TOOL

This invention relates to subsoil cultivating tools.

Modern cultivation techniques require that the soil surface remains flat and is disturbed as little as possible, surface cultivation being as shallow as possible whilst consistant with soil tilth production. From time to time it is necessary and advantageous to cultivate the soil to a greater depth in order to re-establish cracks in the subsoil to permit satisfactory root growth of crops.

Existing subsoil cultivating tools (or subsoilers) generally consist of a framework of longitudinal and transverse beams to which are attached one or more tines projecting downwards to engage with the soil. The framework also carries a coupling means for attachment to a tractor or other towing vehicle. Each tine consists of a leg section at the lower end of which is fixed a replaceable foot or point. The upper end of the leg is generally clamped to one or more of the transverse members of the framework, to facilitate adjustment of transverse spacing between adjacent tines.

In use the subsoiler is drawn through the ground and the shape and rake angle of the foot produce a downward force on the framework to pull the implement to its desired depth. By controlling the depth, the resulting up-thrust on the soil produces cracks which proceed upwards toward the soil surface, thus creating the desired fissuring effect. In order to maintain the motion of each tine foot in a suitably straight path through the ground, parallel to the direction of travel, in the presence of underground resistance from obstructions such as stones and hard patches of subsoil, the tine legs are generally made from substantial, thick-section material of considerable strength and lateral stiffness to provide the necessary directional stability at the foot. It is found however in practice that the lateral thickness of the leg material displaces a considerable volume of soil upwards, which forms a ridge on the surface and may also create large clods of soil on the surface behind the path of the tine. These effects represent a serious obstacle to subsequent surface cultivation operations, which require that the ground surface should be as flat as possible in order to cultivate at a constant shallow depth.

The invention provides a subsoil cultivating tool comprising a support member and at least one tine mounted on the support member, the or each tine having a leg and a cultivator foot mounted on the leg, the leg extending generally downwardly and rearwardly from the support member to the foot and being laterally narrow and flexible whereby to permit lateral deflection of the foot.

4.

The foot is typically elongate and oriented generally parallel to the intended direction of movement. The cross-section of the foot is preferably substantially constant and may be generally round.

The or each tine may further have a wing member attached to the rear of the foot and extending rearwardly and laterally outwardly therefrom. The wing member may advantageously be attached by means allowing the rake angle of the wing to be adjusted.

The leg may be constructed of two or more parts, one of which may form at least a portion of the leading edge of the tine and may be detachable from the remainder of the tine. This detachable part is preferably generally symmetrical so that it can be reattached to the remainder of the tine with the ends of the part reversed.

Two embodiments of the invention will now be described, by way of example, with reference to the accompanying drawings, in which:

5.

Figure 1 is a perspective view of a subsoil cultivating tool embodying the invention;

Figure 2 is a side elevation of one of the tines of the tool of Figure 1;

Figure 3 is a front elevation of the tine of Figure 2;

Figure 4 is a sectional view taken along the line IV-IV;

Figure 5 is a plan view of the tine foot in a deflected position, showing the forces acting on the foot;

Figure 6 is a plan view of the tine leg in a deflected position, showing the forces acting on the leg; and

Figures 7 and 8 are elevations corresponding to Figures 2 and 3 of a modified form of tine.

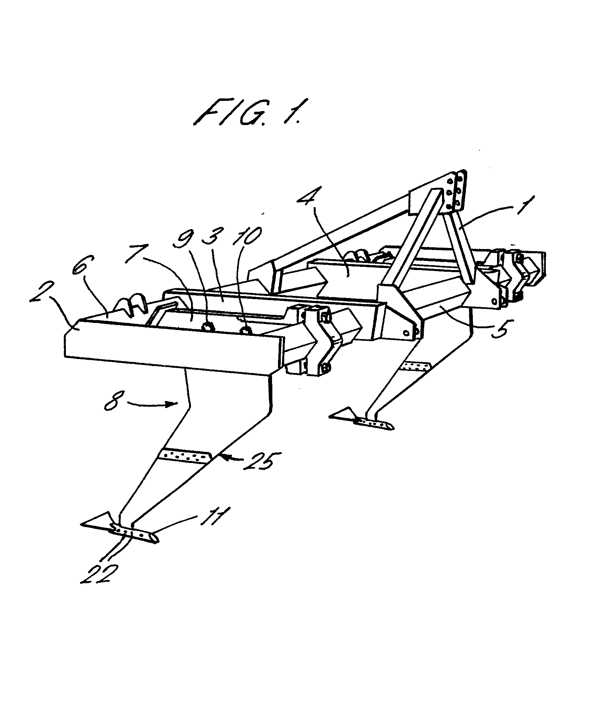

Referring to Figure 1, the cultivating tool comprises a support member in the form of a frame 2 comprising typical longitudinal members 3 and 4 and typical transverse members 5 and 6. The frame 2 is mounted in use on the rear of a tractor

6.

by means of a hitch frame 1 providing the usual three point mounting. Between the transverse members is mounted a bracket 7 on each side, attached at its ends to members 5 and 6.

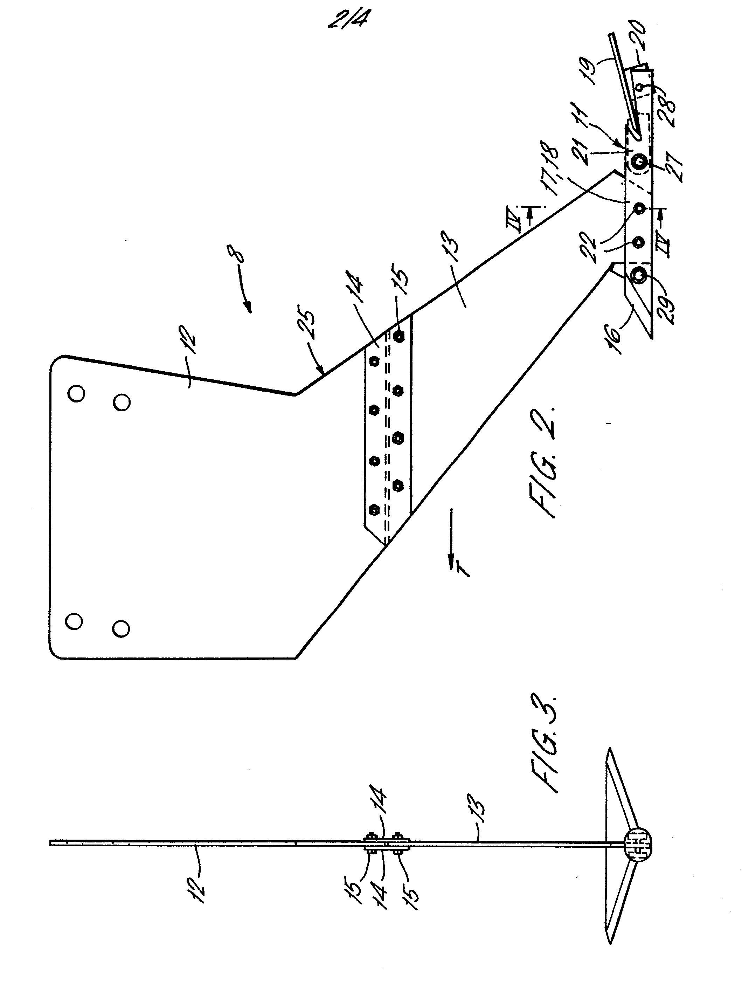

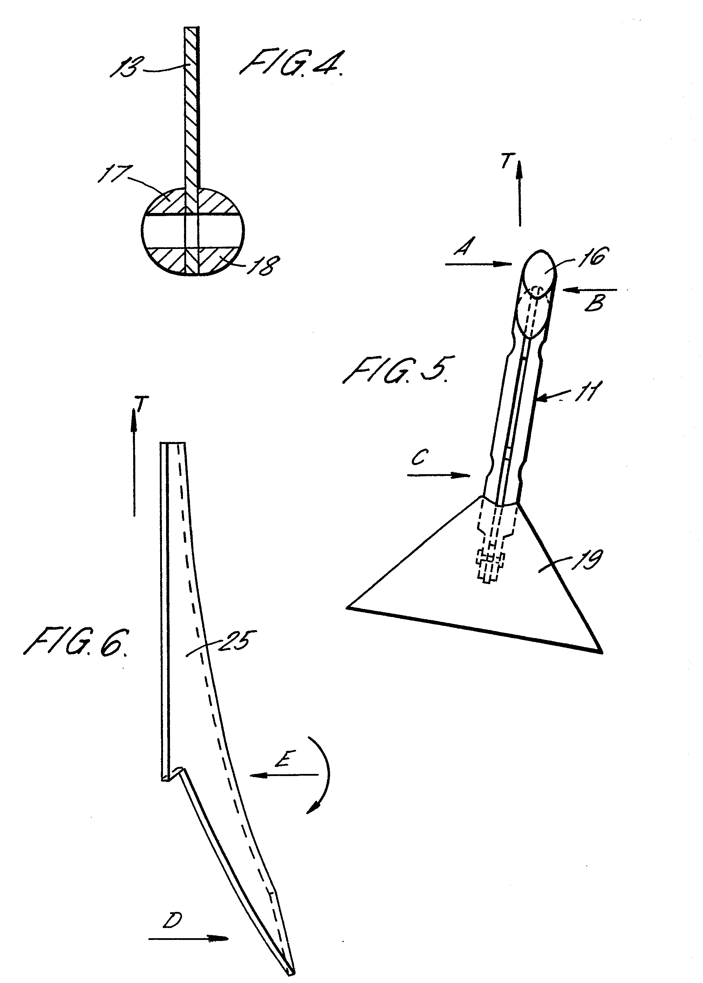

A tine 8 is secured to each bracket 7 by bolts 9, 10. Each tine 8 comprises a laterally narrow and flexible leg 25 in two parts, typically of steel, extending generally downwardly and rearwardly from the frame. An elongate foot 11 having generally parallel sides is attached to the lower end of the leg by pins 22. Referring to Figures 2 and 3, the leg 25 is constructed from thin sections 12, 13 joined together by plates 14, held each side of each section by bolts 15. The foot 11 consists of a hardened point 16, sides 17 and 18 and has attached at the rear end thereof a wing member 19 consisting of an upwardly inclined plate welded to a tongue 21 which is pivoted to members 17 and 18 by a bolt 27. Means for adjusting the inclination of the wing member is provided in the form of an adjustable cam 20 pivoted at 28 to the members 17 and 18 so as to support the wing member at a suitable angle: the cam has four straight edges each a different distance from the pivot giving a choice of four different inclinations of the wing member. One alternative inclination of wing member is shown in Figures 7 and 8 of the modified embodiment. The point 16 has its leading edge forwardly raked at an appropriate angle to the direction of motion. Secured to the point 16 is a tongue sandwiched between members 17 and 18; a bolt 29 passed through the members 17, 18 and this tongue has a nut threaded on its end for the purpose of clamping the members on the tongue, in the same manner as bolt 27 and its nut clamp the members on tongue 21.

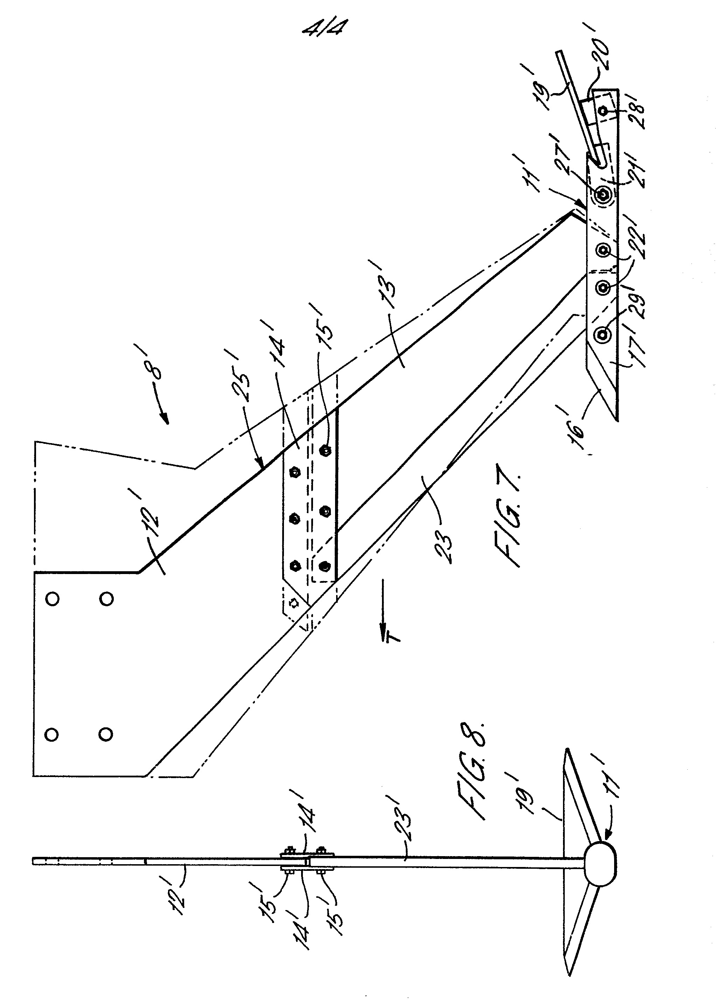

Referring to Figure 4, the combination of the sides 17 and 18 attached each side of the lower leg section 13, produces a foot cross-section of substantially constant form from immediately behind the point 16 to the front of the wing member 19.

The thickness of the leg sections is generally not more than 20mm and a value of between 5mm and 15mm would be typical; 6mm and 12mm have been found successful in two examples. Thus the ratio of the thickness of the leg sections to the free height of leg (the vertical distance between the foot and the leg mounting) may be less than 1:40, less than 1:70 or even less than 1:100.

In use the frame 2 is drawn through the ground by means of its hitch 1 attached to a tractor or towing vehicle. As the foot 11 engages with the ground, the leading edge of the point 16 produces a downward force which draws the implement down to its working depth (with the plates 14 just above the surface of the ground) until it is resisted by the tractor hitch system.

As the foot proceeds through the ground (the direction of travel being shown at T) the leading edge of the point 16 and the width and tilt of the wing section 19 together provide an up-thrust to the soil producing cracks which proceed upward towards the soil surface to create the required cultivation effect. Because the leg is of very thin section the volume of soil displaced upwards is minimal, the surface is left flat, there being no significant disturbance or ridge formation to interfere with subsequent surface cultivation operations, and the leg itself does not take much power in being drawn through the ground.

When the foot meets some form of underground resistance, such as a stone or a harder patch of soil, the lateral flexibility of the leg allows the foot to deflect laterally away from the obstruction. The form of the foot and the shape of the leg are such that a combination of restoring forces proportional to the magnitude of the deflection are set up to return the foot to its desired path parallel to the direction of motion of the tractor. Figure 5 shows the effect of a sideways force A, presented to the left-hand side of the point 16 by an obstruction as seen from above. Some details are omitted from this Figure for the sake of clarity.

Because the foot is of substantially constant section along its length, each side is in contact with the wall of soil formed by its path and thus any slight movement is immediately resisted by restoring forces B and C from the soil, force B resisting lateral movement and force C the yawing movement about a generally vertical axis. Should forces B and C be insufficient on their own to correct the effect of the disturbing force A, the resilience of the leg itself will also counteract the effect of the disturbing force.

Figure 6 shows the effect of a sideways force D applied to the lower end of the leg seen from above, neither the division of the leg nor the foot being shown in this figure for the sake of clarity. Because the leg is rearwardly raked, so that the lower end is substantially behind the connection with the frame, the force D, as it deflects the material, induces opposing forces E within the material which also turn foot 11 in the opposite sense of rotation to that caused by the yawing effect of force A on the point 16, directing the foot back towards its desired path. It will be evident that the combination of restoring forces produced by the foot and the leg together always oppose any deflection applied to the point by an obstruction met during forward travel and are proportional in magnitude to the deflection.

11.

Figures 7 and 8 are views corresponding to Figures 2 and 3, but showing a modified form of tine 8'. This modified tine 8' is similar in most respects to the tine 8, corresponding elements being shown by the same reference numerals primed, but there are two lower leg sections, 13' and 23, the shin section 23 forming a portion of the leading edge of the tine. As a comparison in profile, the outline of leg 25 is shown in ghost lines. The section 23, because of its engagement with the ground, sustains more wear than other parts of the tine and is therefore made detachable so that it can be easily replaced. It can be replaced by an identical section or by an alternative section of different material and/or thickness to suit the nature of the soil and the level of acceptable surface disturbance. The shape of the section 23 is generally symmetrical so that it can be reattached with its ends reversed, in order to prolong the life of the section.

Like the foot 11, the foot 11' is generally round in cross-section but is slightly more flattened owing to the greater separation of the sides 17' and 18' by the shin section 23 which is thicker than the leg section 13. The shin section 23 is also thicker than the trailing section 13', in one practical example being 12mm thick compared to an 8mm thickness of section 13'.

Rather than a rigid connection between frame and tine, a pivotal connection may be substituted with a pivot axis either vertical or in a vertical plane orientated longitudinally of the direction of movement. This allows the tine greater freedom of movement and orientation in use, giving greater compensation for variations and obstacles in the soil. Similarly, the foot may be pivotally mounted on the leg about a generally horizontal axis, allowing the foot to "float" in use according to the forces it experiences.

# CLAIMS

1.    A subsoil cultivating tool comprising a support member (2) and at least one tine (8,8') mounted on the support member, the or each tine having a leg (25,25') and a cultivator foot (11,11') mounted on the leg, the leg extending generally downwardly and rearwardly from the support member to the foot and being laterally narrow and flexible whereby to permit lateral deflection of the foot.

2.    A tool as claimed in claim 1 wherein the foot is elongate and oriented generally parallel to the intended direction of movement.

3.    A tool as claimed in either claim 1 or claim 2 wherein the foot is of substantially constant cross-section.

4.    A tool as claimed in claim 3 wherein the cross-section of the foot is generally round.

5.  . A tool as claimed in any preceding claim wherein the or each tine further has a wing member (19,19') attached to the rear of the foot and extending rearwardly and laterally outwardly therefrom.

6.  A tool as claimed in claim 5 wherein the wing member is attached by means allowing the rake angle of the wing to be adjusted.

7.  A tool as claimed in any preceding claim wherein the leg is constructed of two or more parts (12,13,12',13',23).

8.  A tool as claimed in claim 7 wherein a said part (23) forming at least a portion of the leading edge of the tine is detachable from the remainder of the tine.

9.  A tool as claimed in claim 8 werein the said detachable part is generally symmetrical so that it can be reattached to the remainder of the tine with the ends of the part reversed.

FIG. 1.

FIG. 2.

FIG. 3.

FIG.4.

13

17

18

FIG.5.

T

A

B

16

C

11

19

FIG.6.

T

25

E

D

FIG.7.

FIG.8.